# EUROPÄISCHE PATENTSCHRIFT

(11) **EP 3 308 946 B1**
(45) Veröffentlichungstag und Bekanntmachung des Hinweises auf die Patenterteilung: **08.01.2020**
(21) Anmeldenummer: 17001605.9
(22) Anmeldetag: 28.09.2017
(51) Int. Cl.: B29C 65/18, B29C 65/74, B65B 9/067, B65B 19/02, B65B 51/30, B65B 57/16, B29C 65/08, B29C 65/78

(54) **VERFAHREN UND VORRICHTUNG ZUM HERSTELLEN VON ZIGARETTEN-PACKUNGEN**
METHOD AND DEVICE FOR PRODUCING CIGARETTE PACKAGES
PROCÉDÉ ET DISPOSITIF DE FABRICATION DE PAQUETS DE CIGARETTES

(30) Priorität: 17.10.2016 DE 102016012303
(43) Veröffentlichungstag der Anmeldung: 18.04.2018
(73) Patentinhaber: Focke & Co. (GmbH & Co. KG), 27283 Verden (DE)
(72) Erfinder: Roesler, Burkard, 27337 Blender (DE)
(74) Vertreter: Aulich, Martin

(56) Entgegenhaltungen:
- EP-A1- 1 810 922
- WO-A1-2010/109426
- DE-A1-102010 019 867
- DE-A1-102012 204 196

## Beschreibung

Die vorliegende Erfindung betrifft ein Verfahren zum Herstellen von (Zigaretten-)Packungen mit jeweils einer Umhüllung aus Folie, wobei Zigarettengruppen unter Bildung eines die Zigarettengruppen umgebenden Folienschlauchs von einer fortlaufenden Folienbahn umhüllt werden, wobei ein Siegelorgan im Rahmen einer Eintauchphase während des Transports des Folienschlauchs von einer seitlich des Folienschlauchs befindlichen Ausgangsstellung zwischen zwei benachbarte, von der Folienbahn umhüllte Zigarettengruppen eintaucht und in eine Siegelstellung gebracht wird, in der die Siegelung erfolgt, und wobei das Siegelorgan im Rahmen einer darauf folgenden Siegelphase zwischen den umhüllten Zigarettengruppen eine (Quer-)Siegelnaht in dem Folienschlauch erzeugt. Die Erfindung betrifft des Weiteren eine Herstellvorrichtung zum Herstellen solcher Packungen.

Ein besonderes Problem derartiger Verfahren und Vorrichtungen stellt dar, dass der Siegelvorgang aufgrund der hohen Prozessgeschwindigkeiten sehr schnell erfolgen muss. Lösungen, die rotierende Siegelwalzen zu beiden Seiten des Folienschlauchs vorsehen, haben den Nachteil, dass die Walzen - aufgrund des radienförmigen Bewegungsablaufs - den Folienschlauch während der Siegelung nur sehr kurze Zeit berühren, sodass hohe Siegeltemperaturen eingestellt werden müssen, um eine ausreichende Siegelnahtqualität sicherzustellen. Zudem kann die Siegelung in der Regel nicht ausreichend dicht an der benachbarten Zigarettengruppe erfolgen. Aus diesem Grund muss später in einem zusätzlichen Arbeitsschritt mit geringerem Abstand zur Zigarettengruppe nachgesiegelt und das entsprechende überstehende Ende abgeschnitten werden.

Aus der DE 10 2010 019 867 A1 ist eine Packung für Zigaretten bekannt, deren Packungsinhalt, eine Zigarettengruppe, von einem thermisch siegelbaren Folienschlauch umgeben ist. Eine Längssiegelnaht wird durch unterhalb der Förderstrecke der Zigarettengruppe angeordnete Siegelorgane gebildet. Danach werden durch im weiteren Transportweg angeordnete, rotierende Siegelorgane Quersiegelnähte gebildet.

Die EP 1 810 922 A1 offenbart ein Verfahren und eine Einrichtung zum Verpacken von Gegenständen in einer umhüllenden Folie, z. B. einer Schlauchfolie. Zum Verschweissen der Folie mit einer quer verlaufenden Naht sind an einer Schweisstrommel und Gegentrommel angeordnete Schweissbalken bzw. Gegenbalken vorgesehen, die radial eingefedert werden. Dabei werden die Schweisstrommel und die Gegentrommel so gesteuert, dass im Bereich einer Schweissstrecke ein Geschwindigkeitsvektor an Schweißkante und Fläche des Gegenbalkens immer gleich der Transportgeschwindigkeit der Transportvorrichtung der Gegenstände bzw. der Folie ist.

In der WO 2010/109426 A1 wird eine Vorrichtung mit einem Siegelorgan zum Herstellen von Quersiegelnähten zwischen von Folie umhüllten Produkten beschrieben. Das Siegelorgan kann sich sowohl in bzw. gegen die Transportrichtung der Produkte, als auch senkrecht zur Förderebene bewegen.

Aus der DE 10 2012 204 196 A1 geht eine Horizontalquersiegeleinheit hervor, bei der Siegelbacken um eine Rotationsachse angeordnet sind. Zwischen den Siegelvorgängen werden die Siegelbacken beschleunigt, um eine im Vergleich zum Umfang der Rotationachsen, entlang der die Siegelbacken bewegt werden, geringere Packungslänge zu kompensieren.

Es ist Aufgabe der vorliegenden Erfindung, das Verfahren und die Vorrichtung der eingangs genannten Art weiterzuentwickeln.

Zur Lösung dieser Aufgabe weist das erfindungsgemäße Verfahren die Merkmale des Anspruchs 1 auf.

Entsprechend ist vorgesehen, dass die Bewegung des Siegelorgans wenigstens während eines Zeitabschnitts der Eintauchphase, insbesondere bevor es den Folienschlauch berührt, eine Geschwindigkeitskomponente parallel zum Folienschlauch aufweist, die größer ist als die Folienschlauchgeschwindigkeit, sodass es diesem in diesem Zeitabschnitt voreilt und ohne Berührung der umhüllten Zigarettengruppen in die Siegelstellung überführt werden kann, und dass das Siegelorgan in der Siegelstellung während mindestens eines Zeitabschnitts der Siegelphase insbesondere geradlinig bzw. linear mit der gleichen Geschwindigkeit wie der Folienschlauch parallel zu diesem bewegt wird.

Entsprechend wird das Siegelorgan in der Eintauchphase erfindungsgemäß bezogen auf dessen Geschwindigkeit in der Richtung der Folienschlauchbewegung (bzw. parallel zu dieser) mit den vorgenannten unterschiedlichen Geschwindigkeiten bewegt, was sowohl einen optimierten Eintauchvorgang ermöglicht als auch eine optimierte, zeitlich verlängerte Siegelphase.

Bevorzugt wird das Siegelorgan während der Eintauchphase abgebremst, sodass es zu Beginn der Siegelphase, in der die Siegelung erzeugt wird, eine Geschwindigkeit parallel zu dem Folienschlauch aufweist, die kleiner ist als die Folienschlauchgeschwindigkeit.

Weiter kann vorgesehen sein, dass das Siegelorgan nach dem oben erwähnten Abbremsen innerhalb eines Zeitabschnitts der Siegelphase, der dem Zeitabschnitt der Siegelphase, in der es mit gleicher Geschwindigkeit wie der Folienschlauch bewegt wird, vorhergeht, auf die Folienschlauchgeschwindigkeit beschleunigt wird. Entsprechend erfolgt das Siegeln bzw. das Einbringen der Siegelung bereits während dieser Beschleunigungsphase.

Vorzugsweise wird das Siegelorgan allgemein gesprochen mindestens zu Beginn der Siegelphase mit einer Geschwindigkeit parallel zu dem Folienschlauch bewegt, die kleiner ist als die Folienbahngeschwindigkeit.

In weiterer Ausgestaltung der Erfindung kann vorgesehen sein, dass das Siegelorgan nach Abschluss der Siegelphase in einer Rückführungsphase von seiner Siegelstellung zwischen den Zigarettengruppen abgehoben und in die seitliche Ausgangsposition zurückbewegt wird, wobei das Siegelorgan wenigstens zu Beginn der Rückführungsphase eine Geschwindigkeitskomponente parallel zum Folienschlauch (in Richtung der Folienschlauchbewegung) aufweist, die größer ist als die Folienschlauchgeschwindigkeit, sodass es dem Folienschlauch in diesem Zeitabschnitt voreilt und ohne Berührung der benachbarten, umhüllten Zigarettengruppen seitlich abgehoben werden kann.

Bevorzugt wird das Siegelorgan entlang einer geschlossenen Bahn geführt, wobei es bei Führung entlang eines ersten bogenförmigen Teilstücks dieser Bahn ausgehend von der Ausgangsstellung die Eintauchbewegung in die Siegelstellung vollzieht, bei Führung entlang eines sich an das erste bogenförmige Teilstück anschließenden, (im Wesentlichen) geradlinigen Teilstücks in der Siegelstellung eine (im Wesentlichen) geradlinige Vorschubbewegung in Richtung der Folienschlauchbewegung, und eine Rückführungsbewegung von der Siegelstellung des Siegelorgans in die seitliche Ausgangsposition bei Führung entlang eines sich daran anschließenden, zweiten bogenförmigen Teilstücks sowie entlang eines parallel mit Abstand zu dem ersten (im Wesentlichen) geradlinigen Teilstück angeordneten zweiten Teilstücks, das ebenfalls (im Wesentlichen) geradlinig ist und am ersten bogenförmigen Teilstück endet.

Vorzugsweise wird das Siegelorgan von einer einen Servomotor umfassenden Antriebseinrichtung angetrieben, die so gesteuert wird, dass sich die unterschiedlichen Geschwindigkeiten des Siegelorgans einstellen. Grundsätzlich ist aber auch denkbar, die unterschiedlichen Geschwindigkeiten über ein geeignetes Kurvengetriebe zu realisieren.

In weiterer Ausbildung der Erfindung kann vorgesehen sein, dass das Siegelorgan benachbart zu einer ersten Seite des Folienschlauchs angeordnet ist und ein Gegenorgan, bevorzugt ein zweites Siegelorgan, gegenüber dem Siegelorgan benachbart zu einer gegenüberliegenden zweiten Seite des Folienschlauchs. und dass das Gegenorgan entsprechend im Rahmen einer eigenen Eintauchphase während des Transports des Folienschlauchs von einer benachbart zu der gegenüberliegenden Seite des Folienschlauchs befindlichen Ausgangsstellung zwischen die zwei benachbarten, von der Folienbahn umhüllten Zigarettengruppen eintaucht und in eine Siegelstellung gebracht wird, in der es dem in seiner Siegelstellung befindlichen Siegelorgan gegenüberliegt, sodass sich der Folienschlauch zum Einbringen von Siegelenergie zwischen dem Gegenorgan und dem Siegelorgan befindet und bevorzugt von diesen mit Druck zusammengedrückt wird.

Weiter verlaufen die Bewegungen des Gegenorgans vorzugsweise synchron zu den Bewegungen des Siegelorgans, mit entsprechend abgestimmter synchroner Eintauchphase, Siegelphase und Rückführungsphase.

Es kann weiter vorgesehen sein, mit einem Trennorgan, insbesondere einem Trennmesser, im Bereich der Siegelnaht insbesondere während der Siegelphase einen Trennschnitt in dem Folienschlauch durchzuführen zum Abtrennen der stromab befindlichen, umhüllten Zigarettengruppe bzw. Zigarettenpackung.

Eine erfindungsgemäße Vorrichtung zum Herstellen von (Zigaretten-)Packungen mit jeweils einer Umhüllung aus Folie, insbesondere zur Durchführung des Verfahrens weist die Merkmale des Anspruchs 9 auf. Diese ist dadurch gekennzeichnet, dass die Bewegung des Siegelorgans im Betrieb der Vorrichtung wenigstens während eines Zeitabschnitts der Eintauchphase, insbesondere bevor es den Folienschlauch berührt, eine Geschwindigkeitskomponente parallel zum Folienschlauch aufweist, die größer ist als die Folienschlauchgeschwindigkeit, sodass es diesem in diesem Zeitabschnitt voreilt und ohne Berührung der umhüllten Zigarettengruppen in die Siegelstellung überführt werden kann.

Bevorzugt weist die Antriebseinrichtung zwischen Servomotor und Siegelorgan ein Getriebe auf, das dafür sorgt, dass das Siegelorgan entlang der oben bereits erwähnten geschlossenen Bahn mit den genannten Teilstücken geführt wird.

Das Getriebe kann ein insbesondere fest stehendes Sonnenzahnradrad umfassen, um das ein Planetenzahnrad kreist, das den halben Durchmesser des Sonnenzahnrades aufweist, wobei die Drehachse des Planetenzahnrades versetzt, nämlich parallel mit Abstand zu der Drehachse eines Drehgelenks verläuft, über das das Siegelorgan mit dem Planetenzahnrad verbunden ist.

Vorzugsweise ist das Siegelorgan an einem Träger angeordnet, der zum einen insbesondere einstückig verbunden ist mit länglichen Führungselementen, das über das vorgenannte Drehgelenk - erstes Drehgelenk - an dem Planetenzahnrad exzentrisch angelenkt ist, wobei das längliche Führungselement im Bereich eines Endes über ein zweites Drehgelenk drehbar gelagert ist, wobei die Drehachse des zweiten Drehgelenks parallel zur Drehachse des ersten Drehgelenks verläuft, und wobei das zweite Drehgelenk derart gelagert ist, dass es parallel zur Transportrichtung der Folienschlauchbahn translatorisch beweglich ist.

In weiterer Ausbildung der Erfindung ist das Siegelorgan, wie bereits oben angedeutet, benachbart zu einer ersten Seite des Folienschlauchs positioniert und ein Gegenorgan, bevorzugt ein zweites Siegelorgan, gegenüber dem Siegelorgan benachbart zu einer gegenüberliegenden zweiten Seite des Folienschlauchs. Die Antriebseinrichtung verfügt dabei über ein zweites Getriebe, über das mit dem Servomotor das Gegenorgan synchron zu dem Siegelorgan bewegbar ist, sodass das Gegenorgan im Betrieb seitlich von der gegenüberliegenden zweiten Folienschlauchseite im Rahmen einer bzw. der eigenen Eintauchphase während des Transports des Folienschlauchs von einer bzw. der benachbart zu dieser Seite des Folienschlauchs befindlichen Ausgangsstellung zwischen die zwei benachbarten, von der Folienbahn umhüllten Zigarettengruppen eintauchen kann und in eine bzw. die Siegelstellung gebracht werden kann, in der es dem in seiner Siegelstellung befindlichen Siegelorgan gegenüberliegt, sodass sich der Folienschlauch zum Einbringen von Siegelenergie zwischen dem Siegelorgan und dem Gegenorgan befindet und bevorzugt von diesen mit Druck zusammengedrückt wird.

Vorzugsweise ist das zweite Getriebe derart ausgelegt, dass die Bewegungen des zweiten Siegelorgans synchron zu den Bewegungen des ersten Siegelorgans verlaufen mit entsprechend abgestimmter synchroner Eintauchphase, Siegelphase und Rückführungsphase.

Zudem ist es bevorzugt so ausgelegt, dass das zweite Siegelorgan in entsprechender Weise entlang einer in ihrer Form identischen geschlossenen Bahn geführt wird wie das erste Siegelorgan, sodass sich bei Führung entlang der jeweiligen Teilstücke die entsprechenden Bewegungen des zweiten Siegelorgans einstellen, wobei die Bahn des zweiten Siegelorgans allerdings benachbart zu der gegenüberliegenden Seite der Folienschlauchbahn angeordnet ist.

Weitere Merkmale der vorliegenden Erfindung ergeben sich aus den beigefügten Patentansprüchen, der nachfolgenden Beschreibung eines bevorzugten Ausführungsbeispiels der Erfindung sowie den beigefügten Zeichnungen. Darin zeigt:

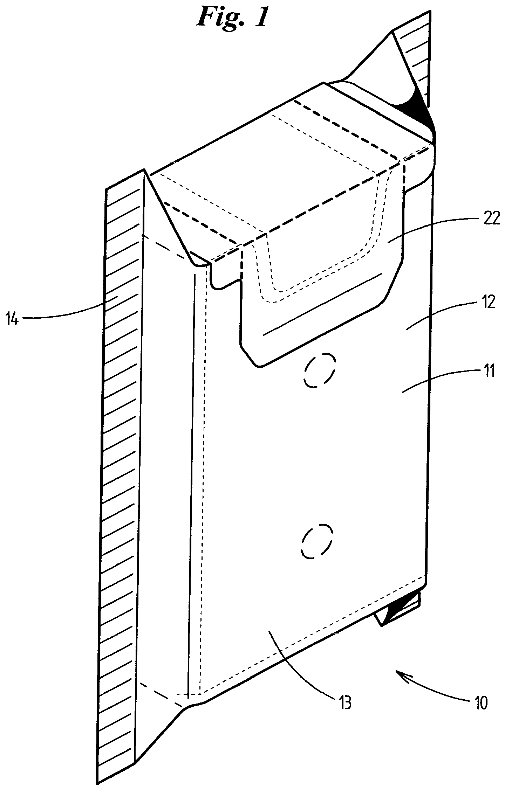

- Fig. 1: eine fertiggestellte Zigarettenpackung mit transparenter Folienumhüllung,
- Fig. 2: eine Vorrichtung zum Einhüllen von Zigarettengruppen in eine Folie in einer Seitenansicht,
- Fig. 3: eine Draufsicht auf die Vorrichtung gemäß Pfeil III in Fig. 2,
- Fig. 4: einen Schnitt entlang der Schnittlinie IV-IV in Fig. 3,

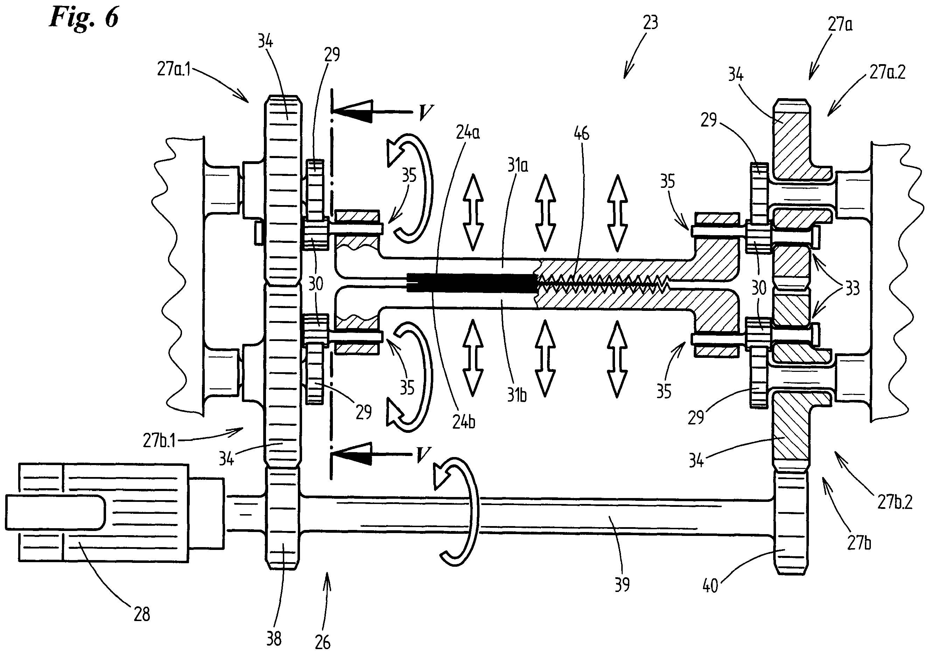

- Fig. 5: eine Einzelheit der Fig. 4 gemäß Pfeil V-V in Fig. 6 in vergrößerter Darstellung,
- Fig. 6: einen Schnitt entlang der Schnittlinie VI-VI in Fig. 3,
- Fig. 7: eine Einzelheit der Vorrichtung in Seitendarstellung, insbesondere ein Paar Siegelorgane, zu einem ersten Zeitpunkt,
- Fig. 8: ein Geschwindigkeit-Zeitdiagramm eines der Siegelorgane, einer Zigarettenpackung sowie des die Zigarettenpackungen einhüllenden Folienschlauchs in Richtung der Folienschlauchbewegung mit Kennzeichnung dieses ersten Zeitpunkts in dem Diagramm,
- Fig. 9: eine Darstellung entsprechend Fig. 7 zu einem späteren Zeitpunkt,
- Fig. 10: ein Diagramm entsprechend Fig. 8 mit Kennzeichnung dieses späteren Zeitpunkts gemäß Fig. 9,
- Fig. 11: eine Darstellung entsprechend Fig. 9 zu einem nochmals späteren Zeitpunkt,
- Fig. 12: ein Diagramm entsprechend Fig. 8 mit Kennzeichnung des Zeitpunkts gemäß Fig. 11,
- Fig. 13: eine Darstellung entsprechend Fig. 11 zu einem nochmals späteren Zeitpunkt,
- Fig. 14: ein Diagramm entsprechend Fig. 8 mit Kennzeichnung des Zeitpunkts gemäß Fig. 13,
- Fig. 15: eine Darstellung entsprechend Fig. 13 zu einem nochmals späteren Zeitpunkt,
- Fig. 16: ein Diagramm entsprechend Fig. 8 mit Kennzeichnung des Zeitpunkts gemäß Fig. 15,

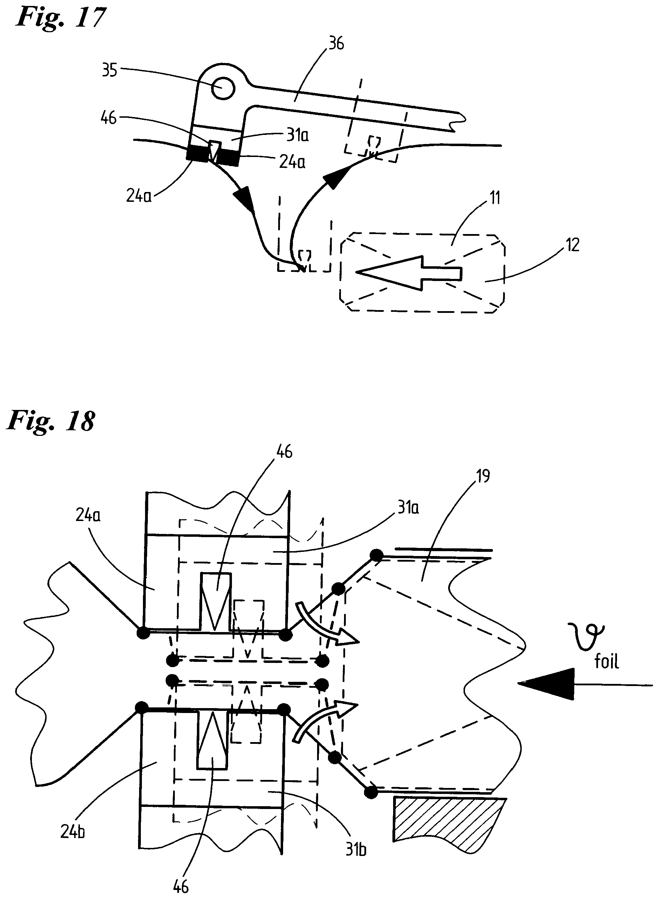

- Fig. 17: eine Darstellung der Bewegung eines Siegelorgans relativ zu der Bewegung einer umhüllten Zigarettengruppe,
- Fig. 18: die Einzelheit aus Fig. 9, allerdings in Draufsicht, zu zwei verschiedenen Zeitpunkten.

Die erfindungsgemäße Vorrichtung sowie das entsprechende Verfahren befassen sich mit der Herstellung von Packungen 10 für Zigaretten. Die quaderförmigen Packungen 10 weisen eine Zigarettengruppe 11 als Packungsinhalt auf. Vorliegend ist jede Zigarettengruppe 11 noch von einem Innenkragen bzw. Tray 12 wenigstens teilweise umgeben. Dies muss aber nicht so sein.

Die Zigarettengruppe 11, gegebenenfalls mit Innenkragen, ist in eine Folie 13 eingehüllt sowie mit einem Öffnungsetikett 22 versehen. Die Folie 13 besteht aus einem thermisch siegelbaren Material und wird entsprechend durch Siegelnähte verschlossen. Besonders wichtig für die vorliegende Erfindung sind zwei seitliche, sich in Längsrichtung der Packung 10 erstreckende Siegelnähte 14, die im gezeigten Ausführungsbeispiel als Flossennähte ausgebildet sind.

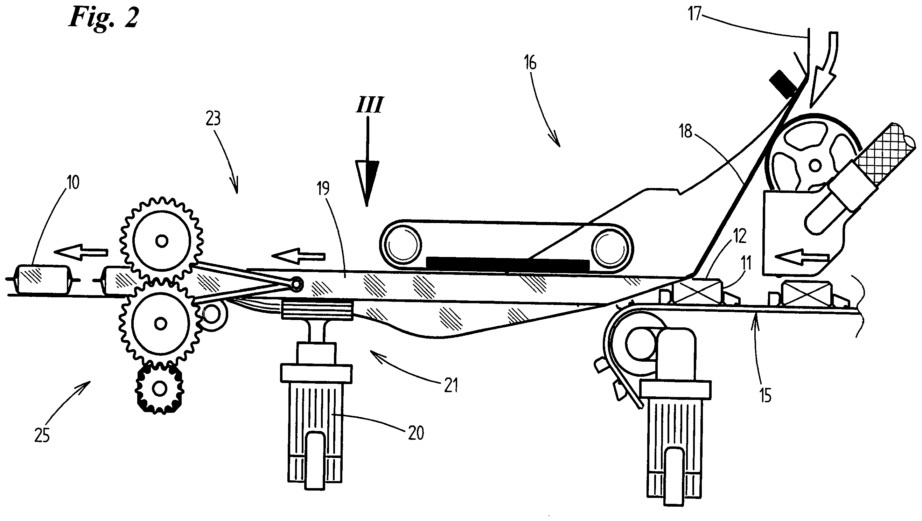

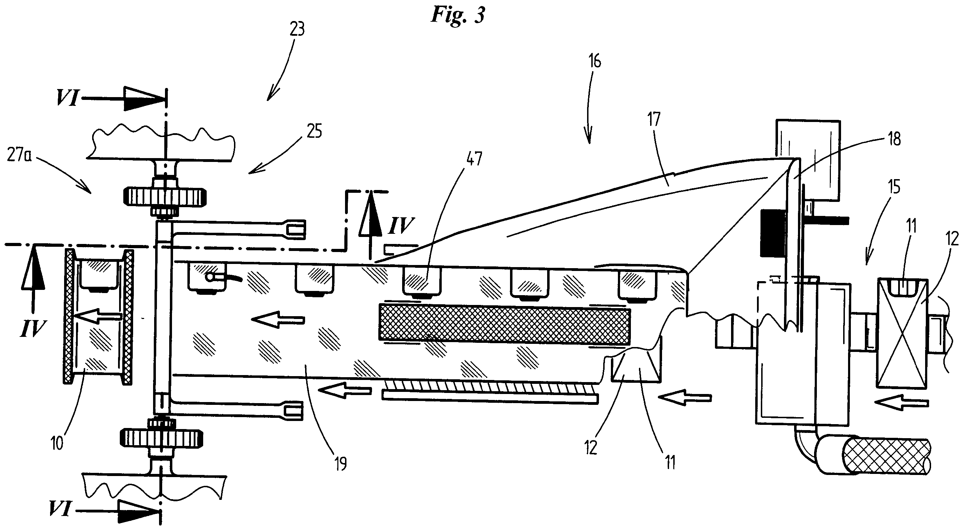

Das Einhüllen der Zigarettengruppen 11, gegebenenfalls mit Innenkragen 12, in die Folie 13 ist in wesentlichen Punkten in den Fig. 2 und 3 dargestellt. Danach werden die Zigarettengruppen 11 (gegebenenfalls mit aufgelegtem Innenkragen 12) entlang einer Transportbahn 15 in Richtung einer Einhüllstation 16 gefördert bzw. transportiert.

Die Folie 13 wird als fortlaufende Folienbahn 17 verarbeitet und über eine Formschulter 18 in der Einhüllstation 16 schlauchartig um die Zigarettengruppen 11 herumgelegt.

Die einzelnen Zigarettengruppen 11 werden mit Abstand entlang der Transportbahn 15 gefördert, vorliegend mit ihrer Längserstreckung quer zur Transportrichtung, sodass im Anschluss an die Einhüllstation 16 ein Folienschlauch 19 mit mehreren mit Abstand zueinander angeordneten Zigarettengruppen 11 gebildet ist.

Anschließend wird eine in Längsrichtung des Folienschlauchs 19 verlaufende Längssiegelnaht (nicht gezeigt) im Bereich der Rückseite der späteren Zigarettenpackungen 10 gebildet. Dieses erfolgt im Bereich einer Siegelstation 23, die ein (Längs-)Siegelaggregat 21 und einen das Siegelaggregat 21 antreibenden Servomotor 20 umfasst.

Zudem werden die Öffnungsetiketten 22 mittels geeigneter Aggregate 47 aufgebracht.

Im Bereich der Siegelstation 23 werden in den Folienschlauch 19 während seines Transports bzw. während er entsprechend weiterbewegt wird des Weiteren quer zur Transportrichtung des Folienschlauchs 19 gerichtete (Quer-)Siegelnähte eingebracht und hierdurch verschlossene, einzelne Packungen 10 nachfolgend von dem Folienschlauch 19 abgetrennt.

Grundsätzliche Einzelheiten zu dem vorgenannten Verfahren können beispielsweise der WO 98/49072 A1 entnommen werden.

Zum Einbringen der (Quer-)Siegelnähte weist die Siegelstation 23 ein Siegelaggregat 25 auf mit einem Paar von Siegelorganen 24a, 24b, vorliegend beheizbaren Siegelbacken. Die Siegelorgane können alternativ natürlich beispielsweise auch mit Ultraschall arbeiten. Die (Quer-)Siegelnähte entsprechen dabei den in Längsrichtung der Packungen 10 verlaufenden Siegelnähten 14.

Die Bewegung der beiden Siegelorgane 24a, 24b erfolgt erfindungsgemäß in besonderer Weise, wie dies nachfolgend noch näher erläutert wird. Zu diesem Zweck verfügt das Siegelaggregat 25 über eine Antriebseinrichtung 26 mit einem ersten Getriebe 27a, einem zweiten Getriebe 27b sowie einem Servomotor 28.

Das erste Getriebe 27a und das zweite Getriebe 27b sind im Wesentlichen baugleich. Das Getriebe 27a treibt das Siegelorgan 24a an, das Getriebe 27b das Siegelorgan 24b.

Jedes Getriebe 27a, 27b verfügt über jeweils zwei identische Baugruppen 27a.1, 27a.2 bzw. 27b.1, 27b.2.

Die Baugruppen 27a.1 und 27a.2 sind gegenüberliegend im Bereich der beiden (Längs-)Seiten bzw. Längsränder des Folienschlauchs 19 positioniert. Gleiches gilt für die Baugruppen 27b.1 und 27b.2.

Jede Baugruppe 27a.1, 27a.2, 27b.1, 27b.2 des jeweiligen Getriebes 27a, 27b umfasst dabei jeweils ein fest stehendes (mit einem Gehäuse verbundenes) Sonnenzahnrad 29, ein dieses Sonnenzahnrad 29 umkreisendes Planetenzahnrad 30 mit vorliegend halb so großem Durchmesser verglichen mit dem Sonnenzahnrad 29, sowie ein Antriebszahnrad 34.

Das Planetenzahnrad 30 ist an dem Antriebszahnrad 34 drehbar gelagert.

Konkret erfolgt die drehbare Lagerung desselben über ein Drehgelenk 33. Dieses besteht im vorliegenden Fall aus einem drehfest mit dem Planetenzahnrad 30 verbundenen Zapfen, der drehbar in einer passenden (zylindrischen) Ausnehmung in dem Sonnenzahnrad 29 sitzt.

Die beiden Planetenzahnräder 30 der Baugruppen 27a.1, 27a.2 des Getriebes 27a sind mit einem sich quer zur Transportbahn des Folienschlauchs 19 mit Abstand zu diesem erstreckenden Siegelorganträger 31a drehbar verbunden, der das Siegelorgan 24a (bzw. die entsprechende Siegelbacke) trägt. Konkret ist der Träger 31a an gegenüberliegenden Seiten über jeweils ein Drehgelenk 35 drehbar mit dem jeweils zugeordneten Planetenzahnrad 30 verbunden. Das jeweilige Drehgelenk 35 ist dabei exzentrisch an dem zugeordneten Planetenzahnrad 30 angeordnet.

In ähnlicher Weise sind die Planetenzahnräder 30 der Baugruppen 27b.1, 271.2 des Getriebes 27b mit einem das Siegelorgan 24b tragenden Siegelorganträger 27b über entsprechende Drehgelenke 35 verbunden.

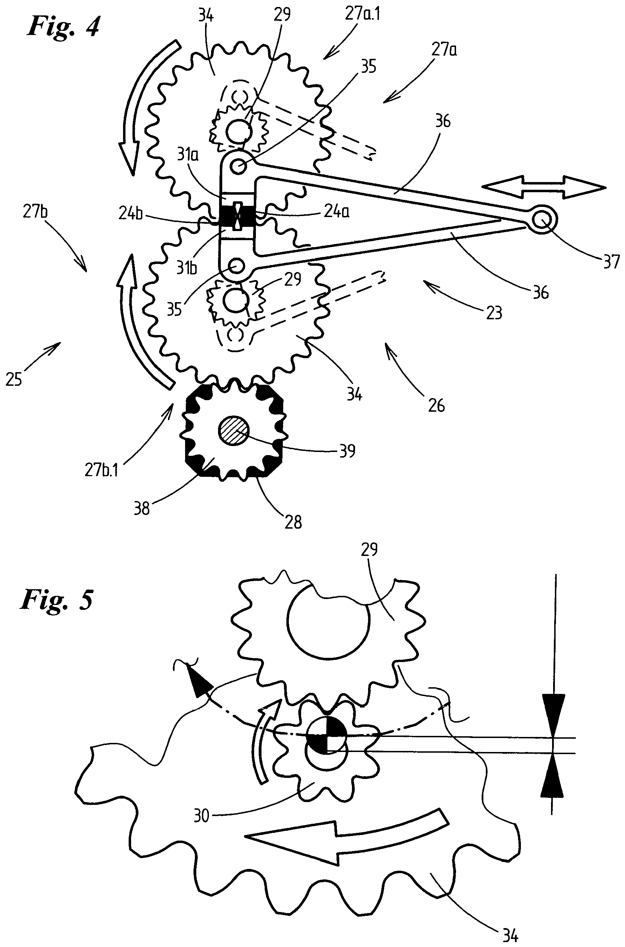

Die Träger 31a, b sind des Weiteren jeweils zu beiden Seiten mit jeweils einem länglichen Führungselement 36 bzw. einer Führungsstange verbunden, die jeweils über ein weiteres Drehgelenk 37 drehbar und translatorisch bewegbar, vgl. Fig. 4, gelagert ist.

Die Antriebszahnräder 34 der Baugruppen 27a.1 und 27b.1 sind in einer gemeinsamen Ebene angeordnet und kämmen miteinander. Das Antriebszahnrad 34 der Baugruppe 27b.1 kämmt zudem mit einem in derselben Ebene angeordneten Zahnrad 38, das drehfest auf einer mit dem Servomotor 28 verbundenen Antriebswelle 39 des Servomotors 28 sitzt.

In gleicher Weise sind die Antriebszahnräder 34 der Baugruppen 27a.2 und 27b.2 in einer gemeinsamen Ebene angeordnet und kämmen miteinander. Das Antriebszahnrad 34 der Baugruppe 27b.2 kämmt zudem mit einem in derselben Ebene angeordneten Zahnrad 40, das ebenfalls drehfest auf der Antriebswelle 39 sitzt. Die Ebene der Antriebszahnräder 34 der Baugruppen 27a.2 und 27b.2 verläuft dabei parallel mit Abstand zu der Ebene der der Antriebszahnräder 34 der Baugruppen 27a.1 und 27b.1.

Im Betrieb versetzt der Servomotor 28 die Antriebswelle 39 in Rotation. Die Zahnräder 38 und 40 der Antriebswelle versetzen daraufhin die entsprechenden Antriebszahnräder 34 in Drehungen. Die drehbar an den Antriebszahnädern 34 gelagerten Planetenzahnräder 30 werden jeweils entsprechend mitbewegt und bewegen sich daraufhin jeweils entlang einer in Fig. 5 angedeuteten, kreisförmigen Bahn um das jeweils zugeordnete Sonnenzahnrad 29.

Die mit den Planetenzahnrädern 30 verbundenen Träger 31a, 31b und mit ihnen die Siegelorgane 24a, 24b werden durch den beschriebenen Aufbau der Getriebe 27a, 27b jeweils entlang einer zugeordneten, geschlossenen Führungsbahn 32a bzw. 32b geführt.

Die Führungsbahn 32a bzw. 32b besteht aus jeweils einem ersten und einem gegenüberliegendes zweiten bogenförmigen, vorliegend halbkreisförmigen Teilstück 41 bzw. 42, wobei die beiden Teilstücke 41 bzw. 42 jeweils durch ein erstes sowie ein parallel zu diesem verlaufendes zweites geradliniges Teilstück 43 bzw. 44 miteinander verbunden sind.

Dies führt dazu, dass sich die Siegelorgane 24a, 24b im Betrieb der Vorrichtung im Rahmen einer Eintauchphase während des Transports des Folienschlauchs 19 synchron aufeinander zu bewegen und dabei zwischen zwei benachbarte, von der Folienbahn umhüllte Zigarettengruppen 11 eintauchen.

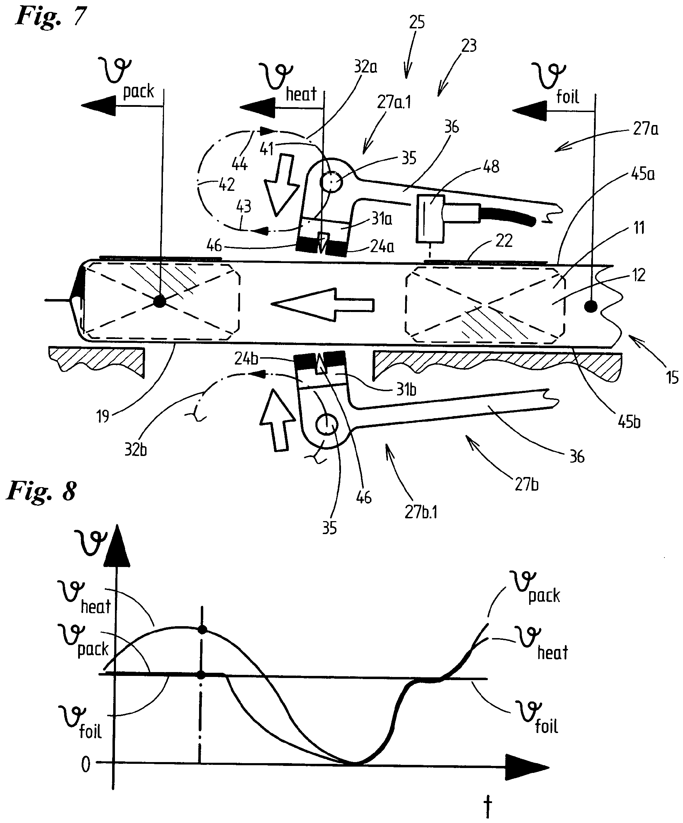

Und zwar ausgehend von einer jeweils seitlich (oberhalb bzw. unterhalb) des Folienschlauchs 19 befindlichen Ausgangsstellung - beispielsweise der in Fig. 7 gezeigten Stellung - von gegenüberliegenden Seiten kommend.

Nämlich einer Seite, die benachbart zu einer ersten Lage 45a des Folienschlauchs 19 angeordnet ist, und einer gegenüberliegenden Seite, die sich benachbart zu einer zweiten Lage 45b des Folienschlauchs 19 befindet.

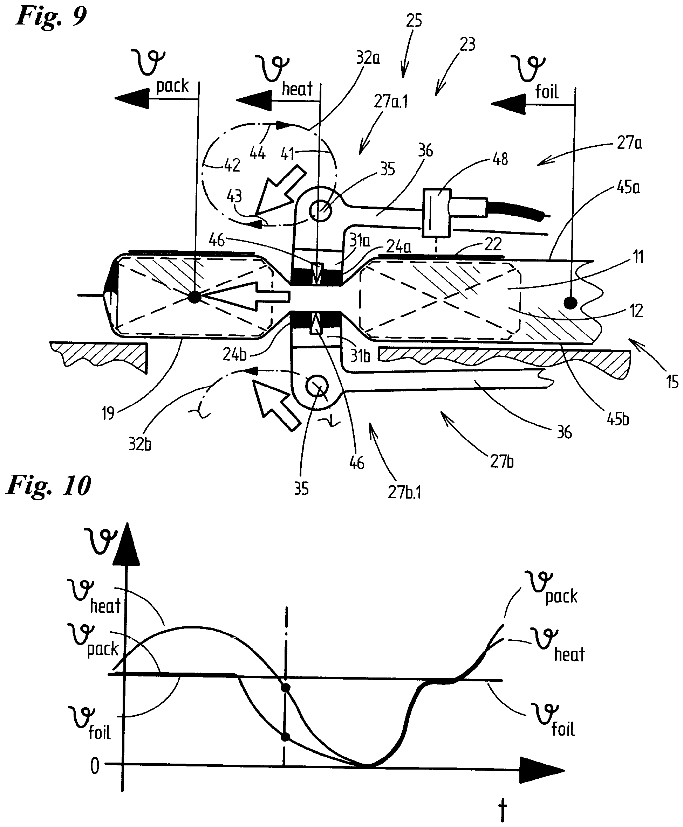

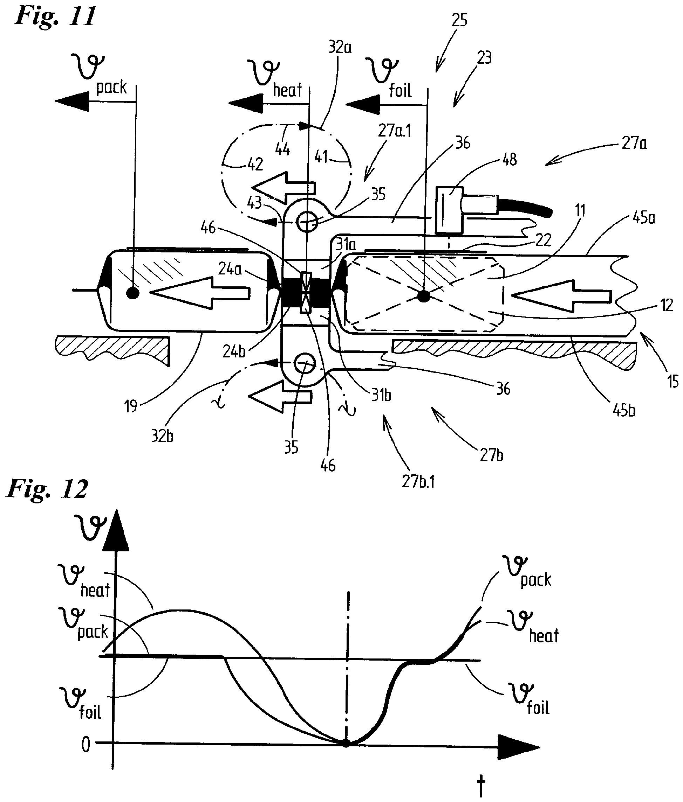

Dabei berühren die Siegelorgane 24a, 24b die gegenüberliegenden Lagen 45a, 45b des Folienschlauchs 19, drücken diese zusammen, bewegen sie unter Mitnahme derselben aufeinander zu, vgl. Fig. 9, und bewegen sich in eine Siegelstellung, vgl. Fig. 11, in der der Folienschlauch 19 bzw. die beiden Lagen 45a, 45b in dem zu siegelnden Bereich zwischen den beiden Siegelorganen 24a, 24b zusammengepresst aneinander liegen.

Im Rahmen der darauf folgenden Siegelphase wird dann zwischen den umhüllten Zigarettengruppen 11 die (Quer-)Siegelnaht 14 in dem Folienschlauch 19 erzeugt, und zwar unter entsprechendem Druck und mittels durch die Siegelorgane 24a, 24b erzeugter Wärme.

Dabei vollzieht das jeweilige Siegelorgan 24a, 24b bei Führung entlang des ersten bogenförmiges Teilstücks 41 der geschlossenen Führungsbahn 32a, 32b ausgehend von der Ausgangsstellung die Eintauchbewegung in die Siegelstellung.

Bei Führung entlang des ersten geradlinigen Teilstücks 43 vollzieht das jeweilige Siegelorgan 24a, 24b in der Siegelstellung eine im Wesentlichen geradlinige Vorschubbewegung in Richtung der Folienschlauchbewegung. Getriebetechnisch wird die Geradlinigkeit dieser Bewegung vornehmlich durch die beschriebene Exzentrizität der Drehlagerung der Träger 31a bzw. 31b an den jeweiligen Planetenzahnrädern 30 erzeugt.

Bei Führung entlang des zweiten bogenförmigen Teilstücks 42 sowie nachfolgend entlang des zweiten geradlinigen Teilstücks 44 erfolgt eine Rückführungsbewegung von der Siegelstellung des jeweiligen Siegelorgans 24a, 24b in die seitliche Ausgangsposition.

Der Servomotor 28 bzw. dessen Geschwindigkeit wird durch eine entsprechende Steuerung derart gesteuert, dass die Bewegung jedes Siegelorgans 24a, 24b wenigstens während eines Zeitabschnitts der Eintauchphase, insbesondere bevor es jeweils den Folienschlauch 19 berührt, eine Geschwindigkeitskomponente parallel zur Bewegung des Folienschlauchs 19 aufweist, die größer ist als die Folienschlauchgeschwindigkeit, vgl. Fig. 7 und 8, sodass das jeweilige Siegelorgan 24a, 24b in diesem Zeitabschnitt voreilt und ohne Berührung der umhüllten Zigarettengruppen in die Siegelstellung überführt werden kann.

In einem späteren Zeitabschnitt der Eintauchphase wird die Geschwindigkeit des Servomotors 28 bzw. die Geschwindigkeit der Siegelorgane 24a, 24b reduziert, d.h. die Siegelorgane 24a, 24b werden abgebremst. Bevorzugt beginnend bereits bevor die Siegelorgane 24a, 24b den Folienschlauch 19 berühren.

Und zwar vorliegend bis jedes Siegelorgan 24a, 24b eine Geschwindigkeitskomponente in Richtung der Bewegung des Folienschlauchs 19 aufweist, die kleiner ist als die Folienschlauchgeschwindigkeit, vgl. Fig. 9 - 12.

Bevorzugt erfolgt diese Verringerung der Geschwindigkeit bis die Siegelorgane 24a, 24b ihre Siegelstellung erreicht haben, vgl. Fig. 12.

Danach beginnt die Siegelphase, in der die Siegelnaht 14 eingebracht wird.

In einem ersten Zeitabschnitt dieser Siegelphase wird die Geschwindigkeit des Servomotors 28 und mit ihm die Geschwindigkeit der Siegelorgane 24a, 24b wieder vergrößert.

Mit anderen Worten werden die Siegelorgane 24a, 24b in diesem ersten Zeitabschnitt beschleunigt und während dieser Beschleunigung wird gesiegelt.

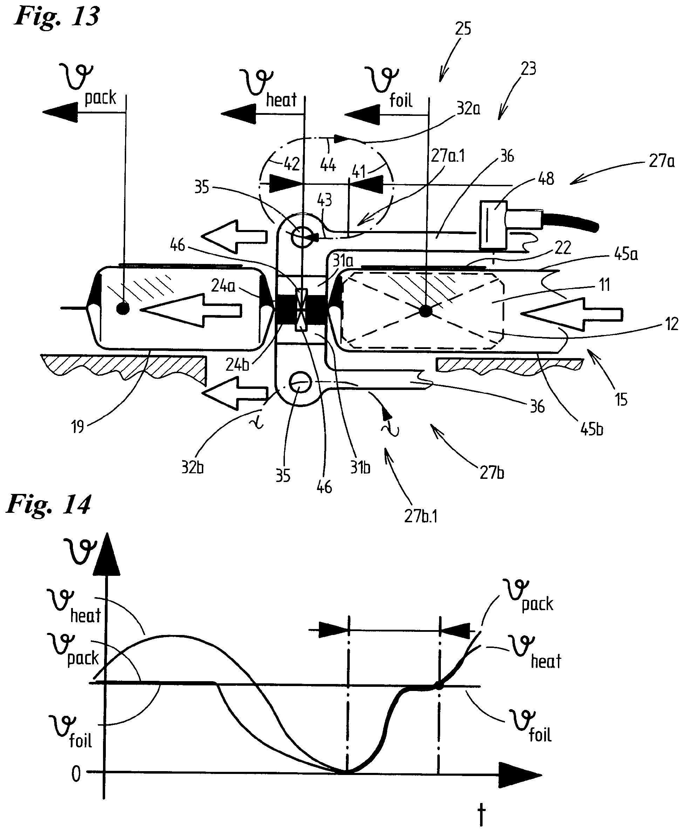

Die Beschleunigung erfolgt solange, bis die Siegelorgane 24a, 24b in ihrer Siegelstellung die Geschwindigkeit des Folienschlauchs 19 erreicht haben, vgl. Fig. 14.

Jedes Siegelorgan 24a, 24b wird dann, wenn deren jeweilige Geschwindigkeit jeweils die Folienschlauchgeschwindigkeit erreicht hat, während eines weiteren bzw. zweiten Zeitabschnitts der Siegelphase mit der gleichen Geschwindigkeit wie der Folienschlauch 19 parallel zu diesem bewegt wird, vgl. Fig. 14. In dieser Zeit wird weiterhin gesiegelt.

Im Bereich der Siegelnaht 14 wird während der vorgenannten Siegelphase bzw. zum Abschluss derselben dann ein Trennschnitt im Bereich der Siegelnaht 14 bzw. in dem Folienschlauch 19 durchgeführt zum Abtrennen der jeweils stromab befindlichen umhüllten Zigarettengruppe 11. Zu diesem Zweck verfügt jeder Siegelorganträger 31a, 31b zusätzlich zu dem Siegelorgan 24a, 24b noch über ein geeignetes Trennorgan 47 bzw. Trennmesser.

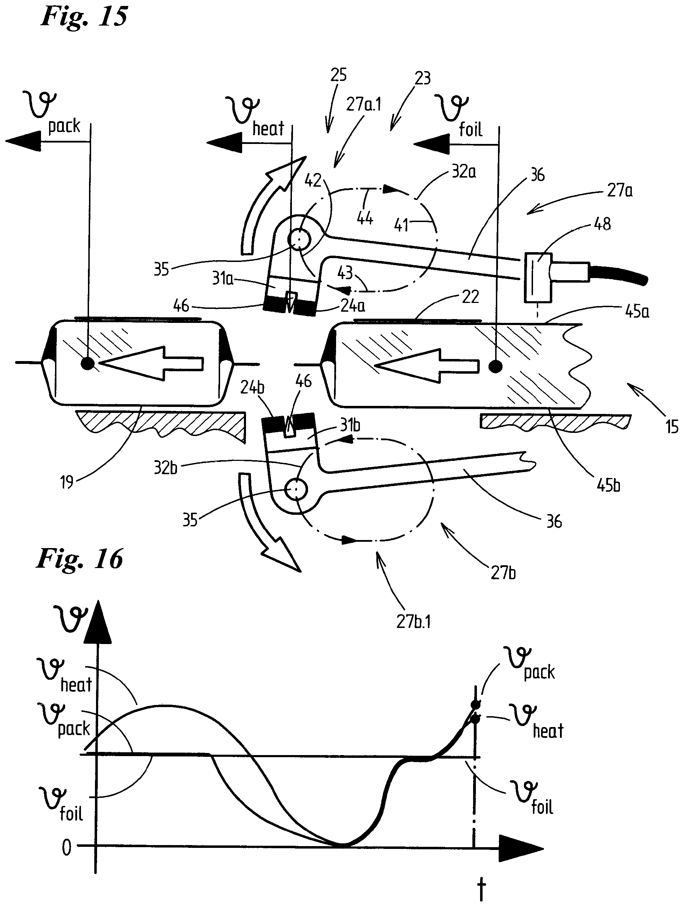

Nach Abschluss der Siegelphase wird jedes Siegelorgan 24a, 24b in einer Rückführungsphase von seiner Siegelstellung zwischen den Zigarettengruppen 11 abgehoben und in die seitliche Ausgangsposition zurückbewegt, vgl. Fig. 15, 16.

Dabei wird die Geschwindigkeit des Servomotors 28 so angepasst, dass das Siegelorgan 24a, 24b wenigstens zu Beginn der Rückführungsphase eine Geschwindigkeitskomponente parallel zum Folienschlauch 19 aufweist, die größer ist als die Folienschlauchgeschwindigkeit, sodass es dem Folienschlauch in diesem Zeitabschnitt voreilt und ohne Berührung der benachbarten umhüllten Zigarettengruppen 11 seitlich abgehoben werden kann.

Es versteht sich, dass die vorstehend beschriebenen Bewegungen der Siegelorgane 24a, 24b bzw. der Trennorgane 46 jeweils mit der Bewegung des Folienschlauchs synchronisiert sind, sodass der jeweilige Siegel- bzw. Trennvorgang lagegerecht zwischen den benachbarten Zigarettengruppen 11 erfolgen kann. Zu diesem Zweck ist in der beschriebenen Ausführungsform ein Sensor 48 vorgesehen, etwa eine Lichtschranke, der die Lage der Öffnungsetiketten 22 vor der Siegelung bzw. vor dem Trennvorgang abfragt. Nach Maßgabe der Signale des Sensors 48 werden dann die Relativbewegungen zwischen dem den Siegelorganen 24a, 24b bzw. der Trennorgane 46 und dem Folienschlauch 19 gesteuert. Alternativ könnten auch die Positionen von auf dem Folienschlauch angeordnete Druckmarken zu diesem Zweck abgefragt werden.

Naturgemäß kann es im Übrigen erforderlich sein, die oben beschriebenen verschiedenen Geschwindigkeiten des Servomotors bzw. der -Siegelorgane und/oder des Folienschlauchs bzw. die Zeitabschnitte, in denen diese eingestellt werden, nach Maßgabe der jeweiligen Packungsabmessungen und/oder des jeweiligen Packungsinhalts oder anderer Merkmale anzupassen.

Beispielsweise bei größeren und insbesondere höheren Zigarettengruppen bzw. Zigarettenpackungen müssen gegebenenfalls andere Geschwindigkeiten gewählt werden, damit die Siegelorgane optimal eintauchen und siegeln können, als bei kleineren bzw. niedrigeren Zigarettengruppen bzw. Zigarettenpackungen.

Diese Anpassung kann auch automatisch geschehen. Zu diesem Zweck kann vorgesehen sein, die entsprechenden notwendigen Steuerungsparameter, etwa unterschiedliche Geschwindigkeiten, in einem Datenspeicher auswählbar abzuspeichern, sodass die Steuerung beispielswiese abhängig von der Packungsart oder anderen Merkmalen hierauf zurückgreifen bzw. diese auswählen kann.

Es versteht sich des Weiteren, dass das vorliegende Ausführungsbeispiel nicht einschränkend zu verstehen ist und verschiedene alternative Ausführungsformen denkbar sind, ohne das Konzept der Erfindung zu verlassen.

**Bezugszeichenliste:**

| | | | |
|---|---|---|---|
| 10 | Packung | 30 | Planetenzahnrad |
| 11 | Zigarettengruppe | 31a | Träger |
| 12 | Tray | 31b | Träger |
| 13 | Folie | 32a | Führungsbahn |
| 14 | Siegelnähte | 32b | Führungsbahn |
| 15 | Transportbahn | 33 | Drehgelenk |
| 16 | Einhüllstation | 34 | Antriebszahnrad |
| 17 | Folienbahn | 35 | Drehgelenk |
| 18 | Formschulter | 36 | Führungselement |
| 19 | Folienschlauch | 37 | Drehgelenk |
| 20 | Servomotor | 38 | Zahnrad |
| 21 | Siegelaggregat | 39 | Antriebswelle |
| 22 | Öffnungsetikett | 40 | Zahnrad |
| 23 | Siegelstation | 41 | erstes bogenförmiges Teilstück |
| 24a | Siegelorgan | 42 | zweites bogenförmiges Teilstück |
| 24b | Siegelorgan | 43 | erstes geradliniges Teilstück |
| 25 | Siegelaggregat | 44 | zweites geradliniges Teilstück |
| 26 | Antriebseinrichtung | 45a | Lage |
| 27a | Getriebe | 45b | Lage |
| 27b | Getriebe | 46 | Trennorgan |
| 27a.1 | Baugruppe | 47 | Öffnungsetikettaggregat |
| 27a.2 | Baugruppe | 48 | Sensor |
| 27b.1 | Baugruppe | | |
| 27b.2 | Baugruppe | | |
| 28 | Servomotor | | |
| 29 | Sonnenzahnrad | | |

## Patentansprüche

1. Verfahren zum Herstellen von Zigaretten-Packungen (10) mit jeweils einer Umhüllung aus Folie (13), wobei Zigarettengruppen (11) unter Bildung eines die Zigarettengruppen (11) umgebenden Folienschlauchs (19) von einer fortlaufenden Folienbahn (17) umhüllt werden, wobei ein Siegelorgan (24a, 24b) im Rahmen einer Eintauchphase während des Transports des Folienschlauchs (19) von einer seitlich des Folienschlauchs (19) befindlichen Ausgangsstellung zwischen zwei benachbarte, von der Folienbahn (19) umhüllte Zigarettengruppen (11) eintaucht und in eine Siegelstellung gebracht wird, in der die Siegelung erfolgt, und wobei das Siegelorgan im Rahmen einer darauf folgenden Siegelphase zwischen den umhüllten Zigarettengruppen (11) eine Quer-Siegelnaht in dem Folienschlauch (19) erzeugt, **dadurch gekennzeichnet, dass** die Bewegung des Siegelorgans (24a, 24b) wenigstens während eines Zeitabschnitts der Eintauchphase, insbesondere bevor es den Folienschlauch (19) berührt, eine Geschwindigkeitskomponente parallel zum Folienschlauch (19) aufweist, die größer ist als die Folienschlauchgeschwindigkeit, sodass es diesem in diesem Zeitabschnitt voreilt und ohne Berührung der umhüllten Zigarettengruppen in die Siegelstellung überführt werden kann, und dass das Siegelorgan (24a, 24b) in der Siegelstellung während mindestens eines Zeitabschnitts der Siegelphase mit der gleichen Geschwindigkeit wie der Folienschlauch (19) parallel zu diesem bewegt wird.

2. Verfahren gemäß Anspruch 1, **dadurch gekennzeichnet, dass** das Siegelorgan (24a, 24b) während der Eintauchphase abgebremst wird, sodass es zu Beginn der Siegelphase, in der die Siegelung erzeugt wird, eine Geschwindigkeit parallel zu dem Folienschlauch (19) aufweist, die kleiner ist als die Folienschlauchgeschwindigkeit.

3. Verfahren gemäß Anspruch 2, **dadurch gekennzeichnet, dass** das Siegelorgan (24a, 24b) nach dem Abbremsen innerhalb eines Zeitabschnitts der Siegelphase, der dem Zeitabschnitt der Siegelphase, in der es mit gleicher Geschwindigkeit wie der Folienschlauch (19) bewegt wird, vorhergeht, auf die Folienschlauchgeschwindigkeit beschleunigt wird.

4. Verfahren gemäß einem oder mehreren der vorhergehenden Ansprüche, **dadurch gekennzeichnet, dass** das Siegelorgan (24a, 24b) nach Abschluss der Siegelphase in einer Rückführungsphase von seiner Siegelstellung zwischen den Zigarettengruppen (11) abgehoben und in die seitliche Ausgangsposition zurückbewegt wird, wobei das Siegelorgan (24a, 24b) wenigstens zu Beginn der Rückführungsphase eine Geschwindigkeitskomponente parallel zum Folienschlauch (19) aufweist, die größer ist als die Folienschlauchgeschwindigkeit, sodass es dem Folienschlauch (19) in diesem Zeitabschnitt voreilt und ohne Berührung der benachbarten umhüllten Zigarettengruppen seitlich abgehoben werden kann.

5. Verfahren gemäß Anspruch 1, 2, 3 oder 4, **dadurch gekennzeichnet, dass** das Siegelorgan (24a, 24b) von einer einen Servomotor (28) umfassenden Antriebseinrichtung (26) angetrieben wird, die so gesteuert wird, dass sich die unterschiedlichen Geschwindigkeiten des Siegelorgans (24a, 24b) einstellen.

6. Verfahren gemäß einem oder mehreren der vorhergehenden Ansprüche, **dadurch gekennzeichnet, dass** mit einem Trennorgan (46) im Bereich der Siegelnaht insbesondere während der Siegelphase ein Trennschnitt in dem Folienschlauch (19) durchgeführt wird zum Abtrennen der stromab befindlichen, umhüllten Zigarettengruppe (11) bzw. der Zigarettenpackung.

7. Verfahren gemäß einem oder mehreren der vorhergehenden Ansprüche, **dadurch gekennzeichnet, dass** das Siegelorgan (24a, 24b) benachbart zu einer ersten Seite des Folienschlauchs (19) angeordnet ist und ein Gegenorgan (24a, 24b), bevorzugt ein zweites Siegelorgan (24a, 24b), gegenüber dem Siegelorgan (24a, 24b) benachbart zu einer gegenüberliegenden zweiten Seite des Folienschlauchs (19), und dass das Gegenorgan (24a, 24b) entsprechend im Rahmen einer eigenen Eintauchphase während des Transports des Folienschlauchs (19) von einer benachbart zu der gegenüberliegenden Seite des Folienschlauchs (19) befindlichen Ausgangsstellung zwischen die zwei benachbarten, von der Folienbahn (19) umhüllten Zigarettengruppen (11) eintaucht und in eine Siegelstellung gebracht wird, in der es dem in seiner Siegelstellung befindlichen Siegelorgan (24a, 24b) gegenüberliegt, sodass sich der Folienschlauch (19) zum Einbringen von Siegelenergie zwischen dem Gegenorgan (24a, 24b) und dem Siegelorgan (24a, 24b) befindet.

8. Verfahren gemäß Anspruch 7, **dadurch gekennzeichnet, dass** die Bewegungen des Gegenorgans (24a, 24b) synchron zu den Bewegungen des Siegelorgans (24a, 24b) verlaufen, mit entsprechend abgestimmter synchroner Eintauchphase, Siegelphase und Rückführungsphase.

9. Vorrichtung zum Herstellen von Zigaretten-Packungen (10) mit jeweils einer Umhüllung aus Folie (13), insbesondere zur Durchführung des Verfahrens gemäß einem oder mehreren der vorhergehenden Ansprüche 1-8, mit einer Einhüllstation (16), an der Zigarettengruppen (11) unter Bildung eines die Zigarettengruppen (11) umgebenden Folienschlauchs (19) von einer fortlaufend transportierten Folienbahn (17) umhüllt werden, mit einer Siegelstation (23) mit einem Siegelorgan (24a, 24b), das im Betrieb der Vorrichtung im Rahmen einer Eintauchphase während des Transports des Folienschlauchs (19) von einer seitlich des Folienschlauchs (19) befindlichen Ausgangsstellung zwischen zwei benachbarte, von der Folienbahn (17) umhüllte Zigarettengruppen (11) eintaucht und in eine Siegelstellung gebracht wird, in der die Siegelung erfolgt, wobei das Siegelorgan (24a, 24b) im Rahmen einer darauf folgenden Siegelphase zwischen den umhüllten Zigarettengruppen (11) eine QuerSiegelnaht in dem Folienschlauch (19) erzeugt, und mit einer einen Servomotor (28) umfassenden Antriebseinrichtung (26) zur Bewegung des Siegelorgans (24a, 24b) sowie eine diese steuernde Steuereinrichtung, die derart ausgebildet sind, dass die Bewegung des Siegelorgans (24a, 24b) im Betrieb der Vorrichtung in der Siegelstellung während mindestens eines Zeitabschnitts der Siegelphase parallel zu dem Folienschlauch (19) erfolgt, und zwar mit der gleichen Geschwindigkeit wie der Folienschlauch (19), **dadurch gekennzeichnet, dass** die Bewegung des Siegelorgans (24a, 24b) im Betrieb der Vorrichtung wenigstens während eines Zeitabschnitts der Eintauchphase, insbesondere bevor es den Folienschlauch (19) berührt, eine Geschwindigkeitskomponente parallel zum Folienschlauch (19) aufweist, die größer ist als die Folienschlauchgeschwindigkeit, sodass es diesem in diesem Zeitabschnitt voreilt und ohne Berührung der umhüllten Zigarettengruppen (11) in die Siegelstellung überführt werden kann.

10. Vorrichtung gemäß Anspruch 9, **dadurch gekennzeichnet, dass** die Antriebseinrichtung (26) zwischen Servomotor (28) und Siegelorgan (24a, 24b) ein Getriebe (27a, 27b) aufweist, das dafür sorgt, dass das Siegelorgan (24a, 24b) entlang einer geschlossenen Bahn (32a, 32b) geführt wird, wobei das Siegelorgan (24a, 24b) bei Führung entlang eines ersten bogenförmigen, insbesondere halbkreisförmigen Teilstücks (41) dieser Bahn (32a, 32b) ausgehend von der Ausgangsstellung die Eintauchbewegung in die Siegelstellung vollzieht, bei Führung entlang eines sich an das erste bogenförmige Teilstück (41) anschließenden, geradlinigen Teilstücks (43) in der Siegelstellung eine geradlinige Vorschubbewegung in Richtung der Folienschlauchbewegung, und eine Rückführungsbewegung von der Siegelstellung des Siegelorgans (24a, 24b) in die seitliche Ausgangsposition bei Führung entlang eines sich daran anschließenden, zweiten bogenförmigen, insbesondere halbkreisförmigen Teilstücks (42) sowie entlang eines parallel mit Abstand zu dem ersten geradlinigen Teilstück (43) angeordneten zweiten Teilstücks (44), das ebenfalls geradlinig ist und am ersten bogenförmigen Teilstück (41) endet.

11. Vorrichtung gemäß Anspruch 10, **dadurch gekennzeichnet, dass** das Getriebe (27a, 27b) ein Sonnenzahnrad (29) aufweist, um das ein Planetenzahnrad (30) kreist, das den halben Durchmesser des Sonnenzahnrades (29) aufweist, wobei die Drehachse des Planetenzahnrades versetzt, nämlich parallel mit Abstand zu der Drehachse eines Drehgelenks (35) verläuft, über das das Siegelorgan (24a, 24b) mit dem Planetenzahnrad (30) verbunden ist.

12. Vorrichtung gemäß Anspruch 11, **dadurch gekennzeichnet, dass** das Siegelorgan (24a, 24b) an einem Träger (31a, 31b) angeordnet ist, der zum einen insbesondere einstückig verbunden ist mit einem länglichen Führungselement (36), das über das vorgenannte Drehgelenk (35) - erstes Drehgelenk - an dem Planetenzahnrad (30) exzentrisch angelenkt ist, wobei das längliche Führungselement (36) im Bereich eines Endes über ein zweites Drehgelenk (37) drehbar gelagert ist, wobei die Drehachse des zweiten Drehgelenks (37) parallel zur Drehachse des ersten Drehgelenks (35) verläuft, und wobei das zweite Drehgelenk (37) derart gelagert ist, dass es parallel zur Transportrichtung des Folienschlauchs (19) translatorisch beweglich ist.

13. Vorrichtung gemäß Anspruch 10, 11 oder 12, **dadurch gekennzeichnet, dass** das Siegelorgan (24a, 24b) benachbart zu einer ersten Seite des Folienschlauchs (19) angeordnet ist und ein Gegenorgan (24a, 24b), bevorzugt ein zweites Siegelorgan, gegenüber dem Siegelorgan (24a, 24b) benachbart zu einer gegenüberliegenden zweiten Seite des Folienschlauchs (19), und dass die Antriebseinrichtung (26) über ein zweites Getriebe (27a, 27b) verfügt, über das mit dem Servomotor (28) das Gegenorgan (24a, 24b) synchron zu dem Siegelorgan (24a, 24b) bewegbar ist, sodass das Gegenorgan (24a, 24b) im Betrieb seitlich von der gegenüberliegenden zweiten Folienschlauchseite im Rahmen einer eigenen Eintauchphase während des Transports des Folienschlauchs (19) von einer benachbart zu dieser Seite des Folienschlauchs (19) befindlichen Ausgangsstellung zwischen die zwei benachbarten, von der Folienbahn (19) umhüllten Zigarettengruppen (11) eintauchen kann und in eine Siegelstellung gebracht werden kann, in der es dem in seiner Siegelstellung befindlichen Siegelorgan (24a, 24b) gegenüberliegt, sodass sich der Folienschlauch (19) zum Einbringen von Siegelenergie zwischen dem Siegelorgan (24a, 24b) und dem Gegenorgan (24a, 24b) befindet.

14. Vorrichtung gemäß Anspruch 13, **dadurch gekennzeichnet, dass** das zweite Getriebe (27a, 27b) derart ausgelegt ist, dass die Bewegungen des Gegenorgans (24a, 24b) synchron zu den Bewegungen des Siegelorgans (24a, 24b) verlaufen mit entsprechend abgestimmter synchroner Eintauchphase, Siegelphase und Rückführungsphase.

15. Vorrichtung gemäß Anspruch 10 sowie gemäß 13 oder 14, **dadurch gekennzeichnet, dass** das zweite Getriebe (27a, 27b) so ausgelegt ist, dass das Gegenorgan (24a, 24b) in entsprechender Weise entlang einer in ihrer Form identischen geschlossenen Bahn (32a. 32b) geführt wird wie das Siegelorgan (24a, 24b), sodass sich bei Führung entlang der jeweiligen Teilstücke die entsprechenden Bewegungen des Gegenorgans (24a, 24b) einstellen, wobei die Bahn (32a, 32b) des Gegenorgans (24a, 24b) allerdings benachbart zu der gegenüberliegenden Seite des Folienschlauchs (19) angeordnet ist.

16. Vorrichtung gemäß einem oder mehreren der vorhergehenden Ansprüche mehreren der Ansprüche 10 - 15, **dadurch gekennzeichnet, dass** die Steuereinrichtung derart ausgebildet ist, dass sie die Antriebseinrichtung (26) zur Bewegung des Siegelorgans (24a, 24b) und ggf. des Gegenorgans (24a, 24b) derart steuern kann, dass dieses/diese die Bewegungen gemäß den Ansprüchen 2-7 ausführen kann/können.

## Claims

1. Method for producing cigarette packs (10) with a respective wrapper made of sheet material (13), wherein cigarette groups (11) are wrapped in a continuous sheet-material web (17), as a flexible sheet-material tube (19) which encloses the cigarette groups (11) being formed in the process, wherein within the context of a penetration phase, during transportation of the flexible sheet-material tube (19) from a starting position, in which a sealing mechanism (24a, 24b) is located laterally in relation to the flexible sheet-material tube (19), said sealing mechanism penetrates between two adjacent cigarette groups (11) wrapped in the sheet-material web (19) and is moved into a sealing position, in which sealing takes place, and wherein, within the context of a following sealing phase between the wrapped cigarette groups (11), the sealing mechanism generates a transverse sealing seam in the flexible sheet-material tube (19), **characterized in that** at least during a time period of the penetration phase, in particular before the sealing mechanism (24a, 24b) makes contact with the flexible sheet-material tube (19), the movement of said sealing mechanism has a speed component parallel to the flexible sheet-material tube (19) which is greater than the speed of the flexible sheet-material tube, and therefore, during this time period, the sealing mechanism precedes said flexible sheet-material tube and can be transferred into the sealing position without making contact with the wrapped cigarette groups, and **in that** in the sealing position, during at least one time period of the sealing phase, the sealing mechanism (24a, 24b) is moved at the same speed as the flexible sheet-material tube (19) and parallel thereto.

2. Method according to Claim 1, **characterized in that**, during the penetration phase, the sealing mechanism (24a, 24b) is braked, and therefore at the beginning of the sealing phase, in which the sealing is generated, said sealing mechanism has a speed parallel to the flexible sheet-material tube (19) which is smaller than the speed of the flexible sheet-material tube.

3. Method according to Claim 2, **characterized in that** following the braking operation, within a time period of the sealing phase which precedes the time period of the sealing phase in which the sealing mechanism (24a, 24b) is moved at the same speed as the flexible sheet-material tube (19), said sealing mechanism is accelerated to the speed of the flexible sheet-material tube.

4. Method according to one or more of the preceding claims, **characterized in that**, following completion of the sealing phase, in a return phase, the sealing mechanism (24a, 24b) is raised up from its sealing position between the cigarette groups (11) and moved back into the lateral starting position, wherein, at least at the beginning of the return phase, the sealing mechanism (24a, 24b) has a speed component parallel to the flexible sheet-material tube (19) which is greater than the speed of the flexible sheet-material tube, and therefore, during this time period, the sealing mechanism precedes the flexible sheet-material tube (19) and can be raised up laterally without making contact with the adjacent wrapped cigarette groups.

5. Method according to Claim 1, 2, 3 or 4, **characterized in that** the sealing mechanism (24a, 24b) is driven by a drive device (26), which comprises a servomotor (28) and is controlled such that the different speeds of the sealing mechanism (24a, 24b) are established.

6. Method according to one or more of the preceding claims, **characterized in that**, in particular during the sealing phase, a severing mechanism (46) is used to make a severing cut in the flexible sheet-material tube (19) in the region of the sealing seam, so as to sever the wrapped cigarette group (11) located downstream or the cigarette pack.

7. Method according to one or more of the preceding claims, **characterized in that** the sealing mechanism (24a, 24b) is arranged adjacent to a first side of the flexible sheet-material tube (19) and a mating mechanism (24a, 24b), preferably a second sealing mechanism (24a, 24b), is arranged opposite the sealing mechanism (24a, 24b), adjacent to an opposite, second side of the flexible sheet-material tube (19), and **in that** within the context of its own penetration phase, during transportation of the flexible sheet-material tube (19) from a starting position, in which the mating mechanism (24a, 24b) is located adjacent to the opposite side of the flexible sheet-material tube (19), said mating mechanism penetrates between the two adjacent cigarette groups (11) wrapped in the sheet-material web (19) and is moved into a sealing position, in which it is located opposite the sealing mechanism (24a, 24b) located in its sealing position, and therefore, for the introduction of sealing energy, the flexible sheet-material tube (19) is located between the mating mechanism (24a, 24b) and the sealing mechanism (24a, 24b) .

8. Method according to Claim 7, **characterized in that** the movements of the mating mechanism (24a, 24b) run synchronously in relation to the movements of the sealing mechanism (24a, 24b), with an appropriately coordinated, synchronised penetration phase, sealing phase, and return phase.

9. Apparatus for producing cigarette packs (10) with a respective wrapper made of sheet material (13), in particular for implementing the method according to one or more of preceding Claims 1-8, having a wrapping station (16), at which cigarette groups (11) are wrapped in a continuously transported sheet-material web (17), a flexible sheet-material tube (19) which encloses the cigarette groups (11) being formed in the process, having a sealing station (23) with a sealing mechanism (24a, 24b) which, during operation of the apparatus, within the context of a penetration phase, during transportation of the flexible sheet-material tube (19) from a starting position, in which said sealing mechanism is located laterally in relation to the flexible sheet-material tube (19), said sealing mechanism penetrates between two adjacent cigarette groups (11) wrapped in the sheet-material web (17) and is moved into a sealing position, in which sealing takes place, wherein within the context of a following sealing phase between the wrapped cigarette groups (11), the sealing mechanism (24a, 24b) generates a transverse sealing seam in the flexible sheet-material tube (19), and having a drive device (26), which comprises a servomotor (28) and is intended for moving the sealing mechanism (24a, 24b), and a control device, which controls said drive device and is designed such that during operation of the apparatus, in the sealing position, during at least one time period of the sealing phase, the sealing mechanism (24a, 24b) moves parallel to the flexible sheet-material tube (19), to be precise at the same speed as the flexible sheet-material tube (19), **characterized in that** during operation of the apparatus, at least during a time period of the penetration phase, in particular before the sealing mechanism (24a, 24b) makes contact with the flexible sheet-material tube (19), said sealing mechanism movement has a speed component parallel to the flexible sheet-material tube (19) which is greater than the speed of the flexible sheet-material tube, and therefore, during this time period, the sealing mechanism precedes said flexible sheet-material tube and can be transferred into the sealing position without making contact with the wrapped cigarette groups (11) .

10. Apparatus according to Claim 9, **characterized in that**, between the servomotor (28) and sealing mechanism (24a, 24b), the drive device (26) has a gear mechanism (27a, 27b), which ensures that the sealing mechanism (24a, 24b) is guided along a closed path (32a, 32b), wherein, upon guidance along a first arcuate, in particular semicircular section (41) of said path (32a, 32b), the sealing mechanism (24a, 24b), starting from the starting position, performs the penetration movement into the sealing position and, upon guidance along a rectilinear section (43) which adjoins the first arcuate section (41), said sealing mechanism (24a, 24b), in the sealing position, performs a rectilinear advancement movement in the direction of the movement of the flexible sheet-material tube and, upon guidance along an adjoining, second arcuate, in particular semicircular section (42), and along a second section (44) which is spaced apart parallel to the first rectilinear section (43), and is likewise rectilinear and terminates at the first arcuate section (41), said sealing mechanism (24a, 24b) performs a return movement from its sealing position into the lateral starting position.

11. Apparatus according to Claim 10, **characterized in that** the gear mechanism (27a, 27b) has a sun wheel (29), around which orbits a planet wheel (30), which has half the diameter of the sun wheel (29), wherein the axis of rotation of the planet wheel is offset in relation, that is to say is spaced apart parallel, to the axis of rotation of a rotary articulation (35), via which the sealing mechanism (24a, 24b) is connected to the planet wheel (30).

12. Apparatus according to Claim 11, **characterized in that** the sealing mechanism (24a, 24b) is arranged on a carrier (31a, 31b), which is connected, in particular in one piece, to an elongate guide element (36), which is articulated excentrically on the planet wheel (30) via the aforementioned rotary articulation (35) - first rotary articulation - , wherein, in the region of one end, the elongate guide element (36) is mounted in a rotatable manner via a second rotary articulation (37), wherein the axis of rotation of the second rotary articulation (37) runs parallel to the axis of rotation of the first rotary articulation (35), and wherein the second rotary articulation (37) is mounted such that it can be moved in translatory fashion parallel to the transporting direction of the flexible sheet-material tube (19).

13. Apparatus according to Claim 10, 11 or 12 **characterized in that** the sealing mechanism (24a, 24b) is arranged adjacent to a first side of the flexible sheet-material tube (19) and a mating mechanism (24a, 24b), preferably a second sealing mechanism, is arranged opposite the sealing mechanism (24a, 24b), adjacent to an opposite, second side of the flexible sheet-material tube (19), and **in that** the drive device (26) has a second gear mechanism (27a, 27b), via which the mating mechanism (24a, 24b) can be moved, by way of the servomotor (28), synchronously in relation to the sealing mechanism (24a, 24b), and therefore during operation, within the context of its own penetration phase, during transportation of the flexible sheet-material tube (19) from a starting position, in which the mating mechanism (24a, 24b) is located adjacent to said side of the flexible sheet-material tube (19), said mating mechanism can penetrate laterally from the opposite second flexible sheet-material tube between the two adjacent cigarette groups (11) wrapped in the sheet-material web (19) and can be moved into a sealing position, in which it is located opposite the sealing mechanism (24a, 24b) located in its sealing position, and therefore, with the introduction of sealing energy, the flexible sheet-material tube (19) is located between the sealing mechanism (24a, 24b) and the mating mechanism (24a, 24b).

14. Apparatus according to Claim 13, **characterized in that** the second gear mechanism (27a, 27b) is designed such that the movements of the mating mechanism (24a, 24b) run synchronously in relation to the movements of the sealing mechanism (24a, 24b), with an appropriately coordinated, synchronous penetration phase, sealing phase and return phase.

15. Apparatus according to Claim 10 and according to Claim 13 or 14, **characterized in that** the second gear mechanism (27a, 27b) is designed such that it is in a manner corresponding to the sealing mechanism (24a, 24b) that the mating mechanism (24a, 24b) is guided along a closed path (32a, 32b) of identical shape, and therefore, upon guidance along the respective sections, the corresponding movements of the mating mechanism (24a, 24b) take place, wherein the path (32a, 32b) of the mating mechanism (24a, 24b) is nevertheless arranged adjacent to the opposite side of the flexible sheet-material tube (19) .

16. Apparatus according to one or more of the preceding Claims 10-15, **characterized in that** the control device is designed such that it can control the drive device (26) for moving the sealing mechanism (24a, 24b), and if appropriate the mating mechanism (24a, 24b), such that said mechanism or mechanisms can execute the movements according to Claims 2-7.

## Revendications

1. Procédé de fabrication de paquets de cigarettes (10) avec chaque fois une enveloppe en feuille (13), dans lequel deux groupes de cigarettes (11) sont enveloppés par une bande de feuille en mouvement (17) avec formation d'une gaine souple de feuille (19) entourant les groupes de cigarettes (11), dans lequel un organe de soudage (24a, 24b) plonge, dans le cadre d'une phase de plongée pendant le transport de la gaine souple de feuille (19), depuis une position initiale située sur le côté de la gaine souple de feuille (19), entre deux groupes de cigarettes voisins (11) enveloppés par la bande de feuille (19) et est amené dans une position de soudage, dans laquelle le soudage est effectué, et dans lequel l'organe de soudage produit, dans le cadre d'une phase de soudage qui suit, une soudure transversale dans la gaine souple de feuille (19) entre les groupes de cigarettes enveloppés (11), **caractérisé en ce que** le mouvement de l'organe de soudage (24a, 24b) présente, au moins pendant une partie du temps de la phase de plongée, en particulier avant qu'il touche la gaine souple de feuille (19), une composante de vitesse parallèle à la gaine souple de feuille (19), qui est plus élevée que la vitesse de la gaine souple de feuille, de telle manière qu'il précède celle-ci dans cette partie du temps et qu'il puisse être transféré dans la position de soudage sans toucher les groupes de cigarettes enveloppés, et **en ce que** l'organe de soudage (24a, 24b) est déplacé, dans la position de soudage pendant au moins une partie du temps de la phase de soudage, avec la même vitesse que la gaine souple de feuille (19) et parallèlement à celle-ci.

2. Procédé selon la revendication 1, **caractérisé en ce que** l'organe de soudage (24a, 24b) est freiné pendant la phase de plongée, de telle manière qu'au début de la phase de soudage, dans laquelle le soudage est effectué, il présente une vitesse parallèle à la gaine souple de feuille (19), qui est inférieure à la vitesse de la gaine souple de feuille.

3. Procédé selon la revendication 2, **caractérisé en ce que** l'organe de soudage (24a, 24b) est, après le freinage à l'intérieur d'une partie du temps de la phase de soudage, qui précède la partie du temps de la phase de soudage dans laquelle il est déplacé avec la même vitesse que la gaine souple de feuille (19), accéléré jusqu'à la vitesse de la gaine souple de feuille.

4. Procédé selon une ou plusieurs des revendications précédentes, **caractérisé en ce que** l'organe de soudage (24a, 24b) est, après la fin de la phase de soudage, soulevé dans une phase de retour de sa position de soudage entre les groupes de cigarettes (11) et ramené dans la position initiale latérale, dans lequel l'organe de soudage (24a, 24b) présente au moins au début de la phase de retour une composante de vitesse parallèle à la gaine souple de feuille (19), qui est plus élevée que la vitesse de la gaine souple de feuille, de telle manière qu'il précède la gaine souple de feuille (19) dans cette partie du temps et qu'il puisse être soulevé latéralement sans toucher les groupes de cigarettes enveloppés voisins.

5. Procédé selon une revendication 1, 2, 3 ou 4, **caractérisé en ce que** l'organe de soudage (24a, 24b) est entraîné par un dispositif d'entraînement (26) comprenant un servomoteur (28), et qui est commandé de telle manière que les différentes vitesses de l'organe de soudage (24a, 24b) soient réglées.

6. Procédé selon une ou plusieurs des revendications précédentes, **caractérisé en ce que** l'on effectue avec un organe de coupe (46) dans la région de la soudure, en particulier pendant la phase de soudage, une coupe dans la gaine souple de feuille (19) pour détacher le groupe de cigarettes enveloppé (11) ou le paquet de cigarettes se trouvant en aval.

7. Procédé selon une ou plusieurs des revendications précédentes, **caractérisé en ce que** l'organe de soudage (24a, 24b) est disposé au voisinage d'un premier côté de la gaine souple de feuille (19) et un organe opposé (24a, 24b), de préférence un deuxième organe de soudage (24a, 24b), est disposé en face de l'organe de soudage (24a, 24b) au voisinage d'un deuxième côté opposé de la gaine souple de feuille (19), et **en ce que** l'organe opposé (24a, 24b) plonge de façon correspondante, dans le cadre d'une phase de plongée propre pendant le transport de la gaine souple de feuille (19), depuis une position initiale située au voisinage du côté opposé de la gaine souple de feuille (19) entre les deux groupes de cigarettes (11) enveloppés par la bande de feuille (19) et est amené dans une position de soudage, dans laquelle il est opposé à l'organe de soudage (24a, 24b) se trouvant dans sa position de soudage, de telle manière que la gaine souple de feuille (19) se trouve pour l'application de l'énergie de soudage entre l'organe opposé (24a, 24b) et l'organe de soudage (24a, 24b).

8. Procédé selon la revendication 7, **caractérisé en ce que** les mouvements de l'organe opposé (24a, 24b) sont exécutés en synchronisme avec les mouvements de l'organe de soudage (24a, 24b), avec une phase de plongée, une phase de soudage et une phase de retour synchrones accordées de façon correspondante.

9. Dispositif de fabrication de paquets de cigarettes (10) avec chacun une enveloppe en feuille (13), en particulier pour la mise en œuvre du procédé selon une ou plusieurs des revendications précédentes 1 à 8, avec une station d'enveloppage (16), dans laquelle des groupes de cigarettes (11) sont enveloppés en formant une gaine souple de feuille (19) entourant les groupes de cigarettes (11) à partir d'une bande de feuille transportée en mouvement (17), avec une station de soudage (23) avec un organe de soudage (24a, 24b), qui pendant le fonctionnement du dispositif plonge, dans le cadre d'une phase de plongée pendant le transport de la gaine souple de feuille (19), depuis une position initiale se trouvant à côté de la gaine souple de feuille (19) entre deux groupes de cigarettes (11) enveloppés par la bande de feuille (17) et est amené dans une position de soudage, dans laquelle le soudage est effectué, dans lequel l'organe de soudage (24a, 24b) produit, dans le cadre d'une phase de soudage qui suit, une soudure transversale dans la gaine souple de feuille (19) entre les groupes de cigarettes enveloppés (11), et avec un dispositif d'entraînement (26) comprenant un servomoteur (28) pour le déplacement de l'organe de soudage (24a, 24b) ainsi qu'un dispositif de commande commandant celui-ci, qui est configuré de telle manière que le mouvement de l'organe de soudage (24a, 24b) pendant le fonctionnement du dispositif dans la position de soudage se produise pendant au moins une partie du temps de la phase de soudage parallèlement à la gaine souple de feuille (19), notamment avec la même vitesse que la gaine souple de feuille (19), **caractérisé en ce que** le mouvement de l'organe de soudage (24a, 24b) pendant le fonctionnement du dispositif présente au moins pendant un partie du temps de la phase de plongée, en particulier avant qu'il touche la gaine souple de feuille (19), une composante de vitesse parallèle à la gaine souple de feuille (19), qui est plus élevée que la vitesse de la gaine souple de feuille, de telle manière qu'il précède celle-ci dans cette partie du temps et qu'il puisse être transféré dans la position de soudage sans toucher les groupes de cigarettes enveloppés (11).

10. Dispositif selon la revendication 9, **caractérisé en ce que** le dispositif d'entraînement (26) présente entre le servomoteur (28) et l'organe de soudage (24a, 24b) une transmission (27a, 27b), qui assure que l'organe de soudage (24a, 24b) est conduit le long d'un trajet fermé (32a, 32b), dans lequel l'organe de soudage (24a, 24b) accomplit, lors du guidage le long d'une première partie (41) en forme d'arc, en particulier semi-circulaire, de ce trajet (32a, 32b) à partir de la position initiale le mouvement de plongée dans la position de soudage, accomplit lors du guidage le long d'une partie rectiligne (43) se raccordant à la première partie en forme d'arc (41) dans la position de soudage un mouvement d'avance rectiligne dans la direction du mouvement de la gaine souple de feuille, et accomplit un mouvement de retour de la position de soudage de l'organe de soudage (24a, 24b) dans la position initiale latérale lors du guidage le long d'une deuxième partie (42) en forme d'arc, en particulier semi-circulaire, ainsi que le long d'une deuxième partie (44) disposée parallèlement à distance de la première partie rectiligne (43), qui est également rectiligne et qui se termine à la première partie en forme d'arc (41).

11. Dispositif selon la revendication 10, **caractérisé en ce que** la transmission (27a, 27b) présente un pignon solaire (29), autour duquel tourne un satellite (30), qui présente la moitié du diamètre du pignon solaire (29), dans lequel l'axe de rotation du satellite est décalé, à savoir s'étend parallèlement à distance de l'axe de rotation d'une articulation rotative (35), par laquelle l'organe de soudage (24a, 24b) est relié au satellite (30).

12. Dispositif selon la revendication 11, **caractérisé en ce que** l'organe de soudage (24a, 24b) est disposé sur un support (31a, 31b), qui est d'une part relié, en particulier en une seule pièce, à un élément de guidage allongé (36), qui est articulé de façon excentrique par l'articulation rotative précitée (35) - première articulation rotative - au satellite (30), dans lequel l'élément de guidage allongé (36) est supporté de façon rotative dans la région d'une extrémité par une deuxième articulation rotative (37), dans lequel l'axe de rotation de la deuxième articulation rotative (37) s'étend parallèlement à l'axe de rotation de la première articulation rotative (35), et dans lequel la deuxième articulation rotative (37) est supportée de telle manière qu'elle soit mobile en translation parallèlement à la direction de transport de la gaine souple de feuille (19) .

13. Dispositif selon une revendication 10, 11 ou 12, **caractérisé en ce que** l'organe de soudage (24a, 24b) est disposé au voisinage d'un premier côté de la gaine souple de feuille (19) et un organe opposé (24a, 24b), de préférence un deuxième organe de soudage, est disposé en face de l'organe de soudage (24a, 24b) au voisinage d'un deuxième côté opposé de la gaine souple de feuille (19), et **en ce que** le dispositif d'entraînement (26) est muni d'une deuxième transmission (27a, 27b), par laquelle l'organe opposé (24a, 24b) est déplaçable avec le servomoteur (28) en synchronisme avec l'organe de soudage (24a, 24b), de telle manière que l'organe opposé (24a, 24b) puisse pendant le fonctionnement plonger latéralement du deuxième côté opposé de la gaine souple de feuille, dans le cadre d'une phase de plongée propre pendant le transport de la gaine souple de feuille (19), d'une position initiale située au voisinage de ce côté de la gaine souple de feuille (19) entre les deux groupes de cigarettes voisins (11) enveloppés par la bande de feuille (19) et qu'il puisse être amené dans une position de soudage, dans laquelle il est situé en face de l'organe de soudage (24a, 24b) se trouvant dans sa position de soudage, de telle manière que la gaine souple de feuille (19) se trouve pour appliquer l'énergie de soudage entre l'organe de soudage (24a, 24b) et l'organe opposé (24a, 24b) .

14. Dispositif selon la revendication 13, **caractérisé en ce que** la deuxième transmission (27a, 27b) est conçue de telle manière que les mouvements de l'organe opposé (24a, 24b) se déroulent en synchronisme avec les mouvements de l'organe de soudage (24a, 24b) avec une phase de plongée, une phase de soudage et une phase de retour synchrones accordées de façon correspondante.

15. Dispositif selon la revendication 10 ainsi que selon une revendication 13 ou 14, **caractérisé en ce que** la deuxième transmission (27a, 27b) est conçue de telle manière que l'organe opposé (24a, 24b) soit guidé de façon correspondante le long d'un trajet fermé (32a, 32b) de forme identique à celui de l'organe de soudage (24a, 24b), de telle manière que lors du guidage le long des parties respectives les mouvements correspondants de l'organe opposé (24a, 24b) soient exécutés, dans lequel le trajet (32a, 32b) de l'organe opposé (24a, 24b) est cependant disposé au voisinage du côté opposé de la gaine souple de feuille (19).

16. Dispositif selon une ou plusieurs des revendications précédentes 10 à 15, **caractérisé en ce que** le dispositif de commande est configuré de telle manière qu'il puisse commander le dispositif d'entraînement (26) pour le mouvement de l'organe de soudage (24a, 24b) et éventuellement de l'organe opposé (24a, 24b) de telle façon que celui-ci/ceux-ci puisse/puissent exécuter les mouvements selon les revendications 2 à 7.
